# EUROPEAN PATENT APPLICATION

(11) **EP 0 989 624 A1**
(43) Date of publication of application: **29.03.2000**
(21) Application number: 99307455.8
(22) Date of filing: 21.09.1999
(51) Int. Cl.: H01M 10/40, H01M 2/02, H01M 4/58

(54) **Lithium-ion secondary electrochemical cell constructed of low magnetic susceptibility materials**

(30) Priority: 21.09.1998 US 101175 P; 15.12.1998 US 211406
(71) Applicant: WILSON GREATBATCH LTD., Clarence New York 14031 (US)
(72) Inventor: Leising, Randolph A., Williamsville, New York 14221 (US); Takeuchi, Esther S., East Amherst, New York 14051 (US); Spillman, David M., Tonawanda, New York 14223 (US)
(74) Representative: Colmer, Stephen Gary

(57) **Abstract**

A rechargeable alkali metal electrochemical cell, and preferably a lithium-ion secondary cell, constructed of low magnetic susceptibility materials, is described. The non-magnetic characteristics enable the secondary cell to be used within the confines of a Magnetic Resonance Imaging system.

A secondary electrochemical cell wherin the length and the width of the negative electrode extend beyond the length and the width of the positive electrode to provide the positive electrode bounded by the negative electrode. The negative electrode active material includes graphite with specific characteristics.

## Description

### BACKGROUND OF INVENTION

### 1. Field of the Invention

The present invention generally relates to the conversion of chemical energy to electrical energy, and more particularly, to a rechargeable alkali metal electrochemical cell, particularly a lithium-ion secondary cell, designed for use in the vicinity of a Magnetic Resonance Imaging (MRI) system.

### 2. Prior Art

Lithium secondary cells have been under development for many years. Early efforts focused on the use of a lithium anode coupled with metal oxide and metal sulfide cathode materials such as manganese dioxide, titanium disulfide, and others. Despite the enormous amount of research performed on lithium secondary systems, they have not found widespread commercial use. Of concern are the inherent safety problems associated with them. During use, lithium plating can occur in an undesirable manner with dendritic lithium penetrating through the separator and short circuiting the cell. In addition to rendering the cell inoperative, this condition can cause the cell to vent or, in extreme cases, to explode.

During the past decade, increased attention has focused on the use of electrode materials which are capable of more effectively intercalating and de-intercalating lithium ions than the previously used metal oxides and metal sulfides. Cells incorporating such second generation electrode materials are typically referred to as lithium-ion or lithium-rocking chair systems. Although the energy density of these secondary cells is lower than that of primary cells containing lithium metal anodes, they exhibit a higher open circuit voltage, an acceptably high operating voltage and, in many cases, equivalent or better rate capability than many previously developed lithium secondary systems. Most importantly, their safety is generally accepted to be much better.

Presently, lithium-ion secondary cells are used in a large number of commercial applications including telephones, camcorders and other portable electronic equipment. They have been made in a variety of shapes, sizes and configurations including coin, button, cylindrical and prismatic cells. There are several other applications, however, for which rechargeable lithium cells and, in particular, lithium-ion secondary cells may be used but for which present day constructions are unsuitable. Such applications include medical instruments, implantable medical devices and surgical tools.

For many of these applications, the use of prior art lithium-ion secondary cells is unacceptable due to their shape and construction. For instance, modern technology enables surgeons to operate within the confines of an MRI system. One requirement for using battery powered surgical instruments and tools within or near this equipment is that they have as low a magnetic susceptibility as possible so as not to distort the visual image provided by the MRI system to the surgeon. Because present day lithium-ion cells are constructed using a nickel plated steel case, they are too magnetic; therefore, they cannot be used in the vicinity of an MRI system. Also, many implantable devices such as cardiac defibrillators, left-ventricular assist devices, implantable neurostimulators and the like require the use of a hermetically sealed power source. Present day lithium-ion cells are not hermetically sealed but are crimp sealed, precluding their use in these types of applications. Furthermore, in certain types of medical applications, prismatic cells which are sized and shaped for use within the human body are most preferred.

Accordingly, there exists the need for lithium-ion secondary cells which are, among other things, hermetic, have a shape suitable for use with medical instruments, implantable medical devices, surgical tools and the like, and, preferably, have a magnetic susceptibility that makes them acceptable for use in the vicinity of an MRI system.

### SUMMARY OF THE INVENTION

The object of the present invention is, therefore, to provide a hermetic lithium-ion secondary cell suitable for powering medical instruments, implantable medical devices, surgical tools and the like, and which has been constructed of low magnetic susceptibility materials. The non-magnetic characteristics enable the secondary cell to be used within the confines of a Magnetic Resonance Imaging system.

These and other objects of the present invention will become increasingly more apparent to those skilled in the art by reference to the following description and to the appended drawings.

### DETAILED DESCRIPTION OF THE DRAWINGS

Fig. 1 is a scanning electron microscope (SEM) image of irregularly-shaped graphite particles according to the present invention.
Fig. 2 is an SEM image of mesocarbon microbeads (MCMB) according to the prior art.
Fig. 3 is a graph of the cell balance of lithium-ion secondary cells constructed according to the present invention.
Fig. 4 is a schematic representation of a header assembly according to the present invention.
Fig. 5 and 6 are schematic representations of an anode/cathode electrode assembly connected to the header assembly shown in Fig. 4 serving as a winding mandrel.
Fig. 7 is a graph constructed from the charge and discharge cycle of a representative lithium-ion secondary cell constructed according to the present invention.
Fig. 8 is a graph constructed from the cell used in Fig. 7 cycled numerous times between a charged and a discharged state.

### DETAILED DESCRIPTION OF THE PREFERRED EMBODIMENTS

A secondary electrocnemical cell constructed according to the present invention includes an anode active material selected from Groups IA, IIA, or IIIB of the Periodic Table of Elements, including the alkali metals lithium, sodium, potassium, etc. The preferred anode active material comprises lithium.

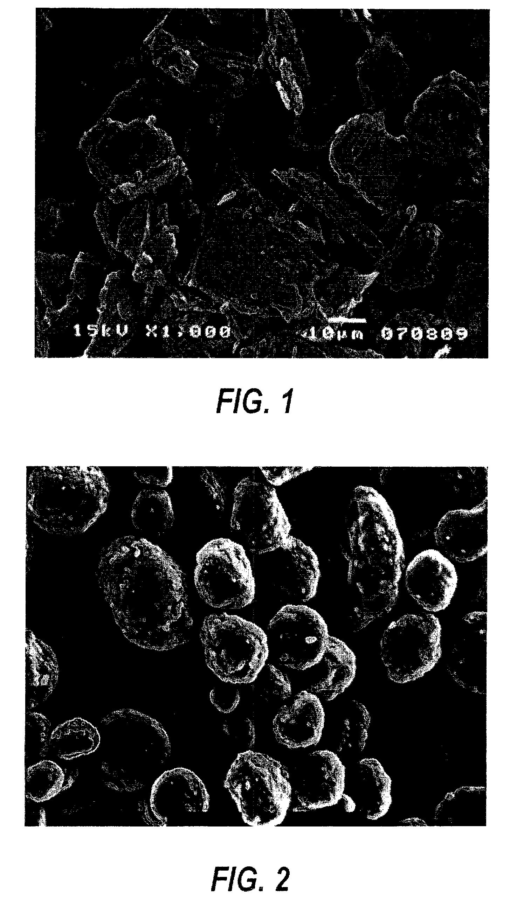

In secondary electrochemical systems, the anode electrode comprises a material capable of intercalating and de-intercalating the alkali metal, and preferably lithium. A carbonaceous anode comprising any of the various forms of carbon (e.g., coke, graphite, acetylene black, carbon black, glassy carbon, pitch carbon, synthetic carbon, mesocarbon microbeads (MCMB), and mixtures thereof) which are capable of reversibly retaining the lithium species, is preferred. Graphite is particularly preferred due to its relatively high lithium-retention capacity. A most preferred form of graphite is characterized by irregularly-shaped particles having an average particle size (laser diffraction method) of about 20 to 30 µm, a *d*₀₀₂ spacing of about 3.364 to 3.369 Å, a Lc of about 800 to 1000 Å, a bulk density of about 0.5 to 1.0 g/cm³, and a specific surface area of (BET method) about 1.5 to 4.0 m²/g. The d₀₀₂,Lc and bulk density were measured by the tap filling up method. Irregularly-shaped graphite particles according to the present invention are commercially available from Nippon Carbon Co., Ltd., Yohohama, Japan under grade LK-702. Fig. 1 is a scanning electron microscope (SEM) image of such a graphite material where the irregular shape of the particles is readily seen. In comparison, Fig. 2 is an SEM image of MCMB graphite which contains regularly-shaped particles.

A typical secondary cell anode is fabricated by mixing about 90 to 97 weight percent graphite with about 3 to 10 weight percent of a binder material which is preferably a fluoro-resin powder such as polytetrafluoroethylene (PTFE), polyvinylidene fluoride (PVDF), polyethyleneretrafluoroethylene (ETFE), a polyamide or a polyimide, and mixtures thereof. To form an anode electrode, this active admixture is contacted to a metallic current collector. The metallic current collector is usually made from a thin foil of copper, nickel, nickel plated steel, stainless steel or titanium, with copper being preferred. Depending on the degree of magnetism required for the cell, other current collector materials may be used and the current collector may also be chemically etched, perforated, or of expanded metal screen. The anode current collector may or may not be coated or treated to prevent corrosion. The carbonaceous anode mixture may be associated with the current collector by casting, pressing, rolling or otherwise contacting the active admixture thereto.

The anode electrode further has a metallic lead welded to the anode current collector. The lead material may consist of copper, nickel, nickel plated steel, stainless steel or titanium, depending on the anode current collector material used, the case and lid materials used and the degree of magnetic susceptibility required for the cell. The anode lead may be welded to the current collector using various methods including, but not limited to, resistance welding, plasma welding, ultrasonic welding or laser welding. The anode lead is then weld contacted to a cell case of conductive metal in a case-negative electrical configuration, as will be described hereinafter. Alternatively, the anode may be formed in some other geometry, such as a bobbin shape, cylinder or pellet to allow an alternate low surface cell design.

The cathode of a secondary cell according to the present invention includes a metal oxide, a metal sulfide, a metal selenide or a metal telluride of a transition metal element. Such metals include vanadium, titanium, chromium, copper, molybdenum, niobium, iron, nickel, cobalt and manganese. The cathode active material is preferably lithiated when the cell is manufactured and may or may not be used in combination with other metal oxide or metal sulfide materials. Lithiated materials are preferred because they are stable in air and readily handled. The more preferred oxides include LiNiO₂, LiMn₂O₄, LiCoO₂, LiCo_{0.92}Sn_{0.08}O₂ and LiCo₁₋ₓNiₓO₂. Among these, lithium cobalt oxide characterized by an average particle size of about 2 to 10 µm, a specific surface area of about 0.4 to 0.5 m²/g, and a bulk density of about 2.0 to 3.0 g/cm³ is most preferred due to its relatively high voltage, high rate capability, high energy density and good cycle life.

Before fabrication into a cathode electrode for incorporation into a lithium-ion secondary cell, the lithiated active material is preferably mixed with a conductive additive. Suitable conductive additives include acetylene black, carbon black and/or graphite. Metals such as nickel, aluminum, titanium and stainless steel in powder form are also useful as conductive diluents when mixed with the above listed active materials. The cathode electrode further comprises a fluoro-resin binder, preferably in a powder form, such as PTFE, PVDF, ETFE, a polyamide or a polyimide, and mixtures thereof.

To form a cathode electrode, the cathode active material, conductive agent and the binder material are mixed and subsequently contacted to a metallic current collector. The current collector is usually made from a thin metallic foil. Aluminum is a particularly preferred material for the cathode current collector since it is very conductive, has a relatively low magnetic susceptibility and is relatively inexpensive and stable within the confines of the cell environment. Additionally, other forms of a current collector may be used including a chemically etched, perforated or expanded metal screen, depending on the particular requirements of the processes used to manufacture the cell. The cathode current collector may or may not be coated or treated to prevent corrosion.

As will be described in detail hereinafter, the cathode current collector may be contacted directly to the terminal pin, or the current collector maybe contacted to a lead that is, in turn, connected to the terminal pin. U.S. Patent No. 5,750,286 to Paulot et al., which is assigned to the assignee of the present invention and incorporated herein by reference, shows a cathode current collector welded directly to the terminal pin. In cases where a cathode lead is used, the lead material is usually aluminum or a high ferritic stainless steel such as 29-4-2 stainless steel, and is welded to the current collector by one of several methods including resistance welding, plasma welding, ultrasonic welding or laser welding.

To discharge a secondary cell constructed according to the present invention, lithium-ions comprising the lithiated cathode active material are intercalated into the carbonaceous anode, and particularly the irregularly-shaped graphite particles according to the present invention, by applying an externally generated electrical potential to recharge the cell. The applied recharging electrical potential serves to draw lithium ions from the cathode material, through the electrolyte and into the carbonaceous anode to saturate the carbon comprising the anode. The resulting LiₓC₆ electrode can have an x ranging between 0.1 and 1.0. The cell is then provided with an electrical potential and discharged in a normal manner.

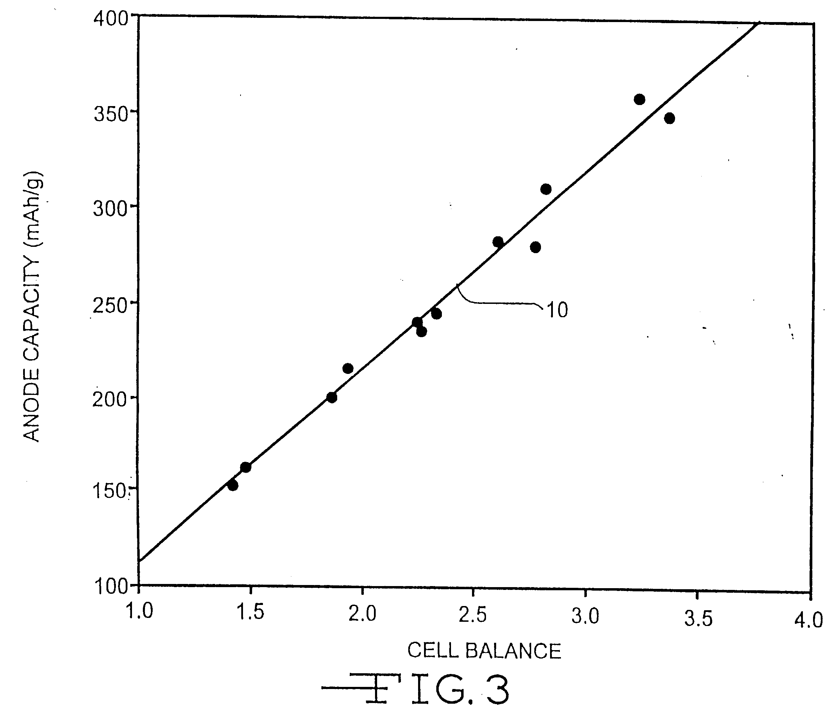

Advantages attributed to the use of irregularly-shaped graphite particles include high capacity for the intercalation of lithium, low initial irreversible capacity, excellent reversibility of lithium doping and undoping, and the ability to utilize a high cell balance without the formation of lithium metal deposits on the anode during cycling. Cell balance is defined as the weight of LiCoO₂ in the cathode divided by the weight of graphite in the anode of the lithium-ion secondary cell. A high cell balance is desirable since it results in a high anode capacity, as illustrated in Fig. 3. As shown by-curve 10 in that figure, anode capacity remains relatively constant over the range of cell balances of about 1.3 to about 2.9. Thus, the overall delivered capacity of lithium-ion cells constructed according to the present invention increases as the cell balance increases. While the graph shows that anode capacity is relatively constant up to a cell balance of about 3.5, it is known that above about 2.9 some metallic lithium plating does begin to occur, which is undesirable.

In comparison, it has been determined that the use of a high cell balance in lithium-ion cells having graphite anodes with regularly-shaped particles, such as mesophase microspheres (MCMB-type graphite), results in the deposition of lithium metal on the anode surface. Lithium metal deposits on the anode present a safety hazard, since the plating of lithium metal is known to form dendrites, which can cause internal short circuits in the cell.

An alternate secondary cell construction comprises intercalating the carbonaceous material with the active alkali material before the anode is incorporated into the cell. In this case, the cathode body can be solid and comprise, but not be limited to, such materials as manganese dioxide, silver vanadium oxide, copper silver vanadium oxide, titanium disulfide, copper oxide, copper sulfide, iron sulfide, iron disulfide and fluorinated carbon. However, this approach is compromised by-the problems associated with handling lithiated carbon outside of the cell. Lithiated carbon tends to react when contacted by air.

The secondary cell of the present invention includes a separator to provide physical segregation between the anode and cathode active electrodes. The separator is of an electrically insulative material to prevent an internal electrical short circuit between the electrodes, and the separator material also is chemically unreactive with the anode and cathode active materials and both chemically unreactive with and insoluble in the electrolyte. In addition, the separator material has a degree of porosity sufficient to allow flow therethrough of the electrolyte during the electrochemical reaction of the cell. The form of the separator typically is a sheet which is placed between the anode and cathode electrodes. Such is the case when the anode is folded in a serpentine-like structure with a plurality of cathode plates disposed intermediate the anode folds in a multiplate design and received in a cell casing or when the electrode combination is rolled or otherwise formed into either a cylindrical or flattened "jellyroll" configuration.

Illustrative separator materials include fabrics woven from fluoropolymeric fibers of polyethylenetetrafluoroethylene and polyethylenechlorotrifluoroethylene used either alone or laminated with a fluoropolymeric microporous film. Other suitable separator materials include non-woven glass, polypropylene, polyethylene, polyamides, polyimides, glass fiber materials, ceramics, a polytetrafluoroethylene membrane commercially available under the designation ZITEX (Chemplast Inc.), a polypropylene membrane commercially available under the designation CELGARD (Celanese Plastic Company, Inc.) and a membrane commercially available under the designation DEXIGLAS (C.H. Dexter, Div., Dexter Corp.).

The choice of an electrolyte solvent system for activating a rechargeable alkali metal electrochemical cell, and particularly a fully charged lithium-ion secondary cell is very limited due to the high potential of the cathode material (up to 4.3V vs. Li/Li⁺ for Li₁₋ₓCoO₂) and the low potential of the anode material (0.01V vs. Li/Li⁺ for graphite). Suitable nonaqueous electrolytes are comprised of an inorganic salt dissolved in a nonaqueous solvent and more preferably an alkali metal salt dissolved in a mixture of organic carbonate solvents comprising dialkyl (non-cyclic) carbonates selected from dimethyl carbonate (DMC), diethyl carbonate (DEC), dipropyl carbonate (DPC), ethylmethyl carbonate (EMC), methylpropyl carbonate (MPC) and ethylpropyl carbonate (EPC), and mixtures thereof, and cyclic carbonates selected from propylene carbonate (PC), ethylene carbonate (EC), butylene carbonate (BC) and vinylene carbonate (VC), and mixtures thereof. Organic carbonates are generally used in the electrolyte solvent system for such battery chemistries because they exhibit high oxidative stability toward cathode materials and good kinetic stability toward anode materials. The ester γ-butyrolactone is also a useful solvent for activating a lithium-ion secondary cell according to the present invention.

Known lithium salts that are useful as a vehicle for transport of alkali metal ions from the anode to the cathode, and back again include LiPF₆, LiBF₄, LiAsF₆, LiSbF₆, LiClO₄, LiAlCl₄, LiGaCl₄, LiC(SO₂CF₃)₃, LiNO₃, LiN(SO₂CF₃)₂, LiSCN, LiO₃SCF₂CF₃, LiC₆F₅SO₃, LiO₂CCF₃, LiSO₃F, LiB(C₆H₅)₄ and LiCF₃SO₃, and mixtures thereof. Suitable salt concentrations typically range between about 0.8 to 1.5 molar.

Unlike prior-art lithium secondary cells in which the case is constructed of nickel plated steel, lithium-ion secondary cells constructed according to the present invention are housed in a case constructed of Type 304 austenitic stainless steel and variants such as 304L, Type 316 austenitic stainless steel and variants such as 316L, or titanium and its alloys. It is known that Type 304, 304L, 316 and 316L stainless steel have a magnetic susceptibility of about 3,520 to 6,700 x 10⁶ while titanium has a magnetic susceptibility of about 182 x 10⁶. The stainless steel may be in a fully annealed, partially annealed or unannealed state although an annealed state is preferred. In the case of stainless steel, the case is annealed by heating in hydrogen, or a vacuum or another suitable non-oxidizing atmosphere such as nitrogen, argon, or a mixture of argon and helium to a temperature of about 1,040°C or about 1,090°C, followed by rapid cooling in the same or other suitable non-oxidizing atmosphere. The rate of cooling through the temperature range of about 780°C to about 450°C is critical to the avoidance of detrimental changes in alloy microstructure. For example, in casings comprised of 304L stainless steel, cooling through the above-mentioned temperature range in about fifteen minutes or less avoids all detrimental changes.

The use of these materials greatly reduces the level of magnetism associated with the casing in comparison to prior art cells, which are housed in a nickel plated steel container. For a more thorough understanding of the magnetic susceptibility of various materials used to construct the present cell, reference is made to a paper authored by John Schneck of General Electric Corporate Research and Development Center, Schenectady, New York 12309, titled "The Role of Magnetic Susceptibility In Magnetic Resonance Imagery: Magnetic Field Compatibility of the First and Second Kinds". The disclosure of that paper is incorporated herein by reference.

The type of housing used is dependent on the type of cell design desired. Prismatic enclosures may be manufactured from a deep drawing process, a powdered metal injection molding process or one of a number of processes which are well known for making battery enclosures. The case may also consist of a rectangular tube housing to which a top header assembly and bottom lid are welded. Such a construction is shown in U.S. Patent No. 5,756,229 to Pyszczek et al., which is assigned to the assignee of the present,invention and incorporated herein by reference.

The present cell includes a hermetic header assembly that consists of a lid, a glassed preform and a terminal pin. The lid material is preferably identical to the case material, i.e. stainless steel or titanium. The terminal pin must be stable and corrosion resistant at the high cell voltage which is characteristic of the lithium-ion system. Two materials which may be used include stainless steel 29-4-C and molybdenum. The glass preform must also be corrosion resistant and possess a thermal expansion coefficient that allows it to hermetically seal to the lid and terminal pin materials. Suitable glasses may include TA-23, CABAL-12, FUSITE 425 or FUSITE 435.

The terminal pin does not necessarily have to be solid, but if it is cylindrical, the terminal pin is not used as an electrolyte fill tube. Also, the terminal pin is not inserter into the cathode material or used to make electrical contact with a bobbin type electrode such as might be present in a cell designed specifically to provide low rate currents.

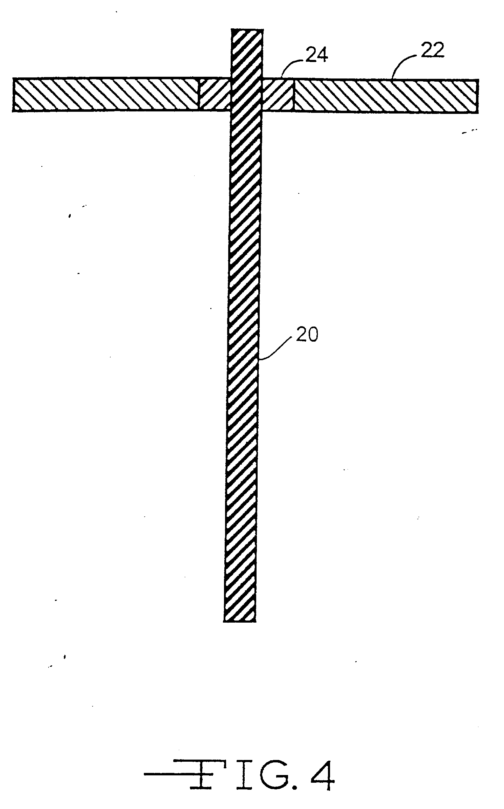

According to an embodiment of the present invention, the above described header containing a terminal pin is used as a winding mandrel for the electrode assembly. Such a construction is schematically shown in Fig. 4 wherein one end of an elongated terminal pin 20 is provided with a hermetic header assembly comprising a lid 22 for the casing (not shown) and a glassed preform 24 securing the lid to the terminal pin. The winding equipment may be fully automated or semi-automated.

Figs. 4 and 5 show a schematic representation of the anode/cathode electrode assembly according to the present invention for use with the terminal pin 20 of the header assembly used as a winding mandrel. The cathode electrode 26 comprises opposed sheets 28 of cathode active material (only one sheet shown) contacted to each side of a conductive cathode current collector 30. The cathode active sheets 28 each comprise spaced -apart first and second ends 32 and 34 meeting with first and second edges 36 and 38 extending to opposed sides 40 (only one side shown) to provide each cathode sheet having a width between the edges 36, 38, a length between the ends 32, 34 and a thickness between the sides. End 32 of cathode sheet is provided spaced from an end 40 of the current collector 30 to provide an uncoated portion 42 secured to a terminal pin 20 such as by welds 44. The welding method used may include resistance welding, plasma welding, ultrasonic welding or laser welding. In order to facilitate welding, the pin may be rounded, flattened, chemically etched, mechanically roughened, or partially split.
Additionally, a tubular couple (not shown) may be welded to the terminal pin 20 with the electrode assembly subsequently welded to the tubular couple. Such a terminal pin/tubular couple construction is shown and described in U.S. Patent No. 5,250,373 to Muffoletto et al., which is assigned to the assignee of the present invention and incorporated herein by reference.

In a similar manner as the cathode electrode 26, the anode electrode 46 is comprised of opposed sheets 48 of anode active material (only one sheet shown) contacted to each side of a conductive anode current collector (not shown). The anode active sheets 48 each comprise spaced apart first and second ends 50 and 52 meeting with first and second edges 54 and 56 extending to opposed sides 58 (only one side shown) to provide each anode sheet having a width between the edges 54, 56, a length between the ends 50, 52 and a thickness between the sides. An end of the anode current collector proximate anode end 52 is secured, such as by welding, to an anode lead 60.

Of utmost importance is that only the uncoated portion 42 of the cathode current collector 30 is in direct contact with the elongated terminal pin 20. Once the uncoated portion 42 is wound at least once around the terminal pin 20 and as the cathode active material is beginning to be taken up on the terminal pin, the anode electrode 46 is inserted into the wind and the two electrodes are then wound into a spiral configuration.

An important aspect of the present invention is that the width and length of the cathode electrode 26 are shorter or smaller than that of the anode electrode 46. In other words, the cathode material is completely bounded by the anode material so as not to cause lithium plating. Therefore, that portion of the anode electrode 46 which contains electrochemically active components extends beyond the cathode electrode 26 at the end of the cell wind. Likewise, at the beginning of the cell wind, enough of the uncoated portion 42 of the cathode current collector is provided to ensure that it is opposite a portion of the anode active sheet 48. Should the electrochemically active cathode material 28, which is laminated to the cathode current collector 30, not be completely opposed by electrochemically active anode material 48, the possibility exists that lithium metal will plate within the cell. This is undesirable as it may compromise the performance or the safety of the cell. Finally, it should be noted that the separator length and width extend beyond that of the anode assembly.

The unique manner in which the cathode electrode 26 is secured to the elongated terminal pin 20 results in a cell with decreased manufacturing time and cost. In addition to eliminating several parts including an insulator and the cathode lead, conventional process steps such as locating an insulator within the cell stack assembly, welding the cathode lead to the cathode current collector and locating the cathode current collector within the cell assembly are eliminated. Therefore, direct material costs, labor costs and manufacturing time for the cell are all lowered.

After the electrode assembly is wound and inserted into the casing, the anode lead is welded to the interior of the casing at one or more of a number of locations. Depending on the cell design, the anode lead 60 may be welded to the inside of the case or to the underside of the header. Additionally, the anode lead 60 may be pinched between the lid 22 and the case and subsequently fused as the lid 22 and case are hermetically welded together. Methods of welding the anode lead to the case, to the lid or to both include resistance welding, plasma welding, ultrasonic welding and laser welding. Regardless of where the anode lead is welded to the case, the header assembly is hermetically welded to the case.

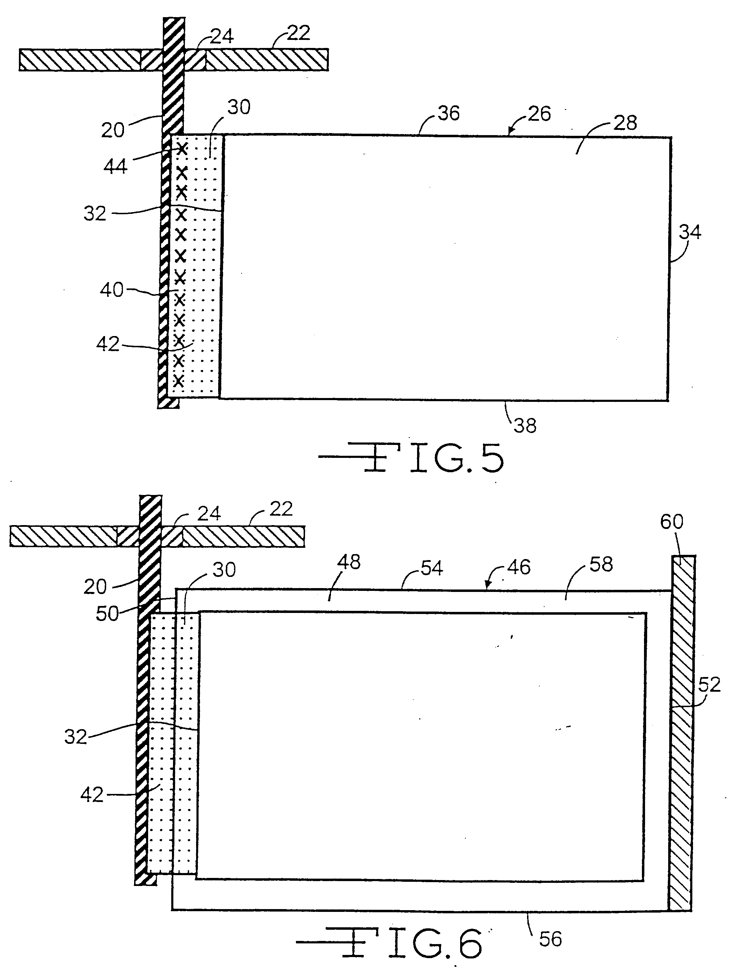

An alternate method of assembling the cell involves winding the anode and cathode electrode on a mandrel, removing the mandrel from the wind and inserting the wound electrode assembly into a cell case or container. In such a design, an elongated terminal pin is not required. Instead, a cathode lead is welded to the current collector by one of numerous welding methods such as resistance welding, plasma welding, ultrasonic welding or laser welding. The cathode lead is then welded directly to the terminal pin. As with the elongated terminal pin shown in Figs. 4 to 6, the cathode lead may be rounded, flattened, chemically etched or mechanically roughened in order to facilitate welding. Additionally, a tubular couple may be initially welded to the cathode lead with the cathode assembly subsequently welded to the couple. This latter terminal pin construction is shown and described in the previously referenced U.S. Patent No. 5,250,373 to Muffoletto et al.

Regardless of the winding method, the cell is thereafter filled with the electrolyte solution described hereinabove, and hermetically sealed such as by close-welding a stainless steel ball over the fill hole, but not limited thereto. This above assembly describes a case-negative cell which is the preferred construction for the lithium-ion secondary cell of the present invention. As is well known to those skilled in the art, the electrochemical system of the present invention can also be constructed in a case-positive configuration.

Thus, hermetic, lithium-ion secondary cells constructed according to the present invention preferably comprise a casing of a material having a magnetic susceptibility of at least about 182 x 10⁶, or greater; graphite having an average particle size of about 20 to 30 µm, a *d*₀₀₂ spacing of about 3.364 to 3.369 Å, a Lc of about 800 to 1000 Å, a bulk density of about 0.5 to 1.0 g/cm³, and a specific surface area of about 1.5 to 4.0 m²/g as a negative electrode active material contacted to a copper current collector; lithium cobalt oxide as a positive electrode active material contacted to an aluminum current collector, wherein the negative electrode and the positive electrode are electrochemically associated with each other housed in the casing; and an electrolyte solution activating the negative and the positive electrodes, and wherein a periphery of the positive electrode is completely bounded by a periphery of the negative electrode to prevent lithium from plating as the cell is repeatedly cycled between a charged and a discharged condition. Such a cell exhibits greatly reduced magnetic susceptibility in comparison to prior art lithium secondary cells, without compromising cycling efficiency.

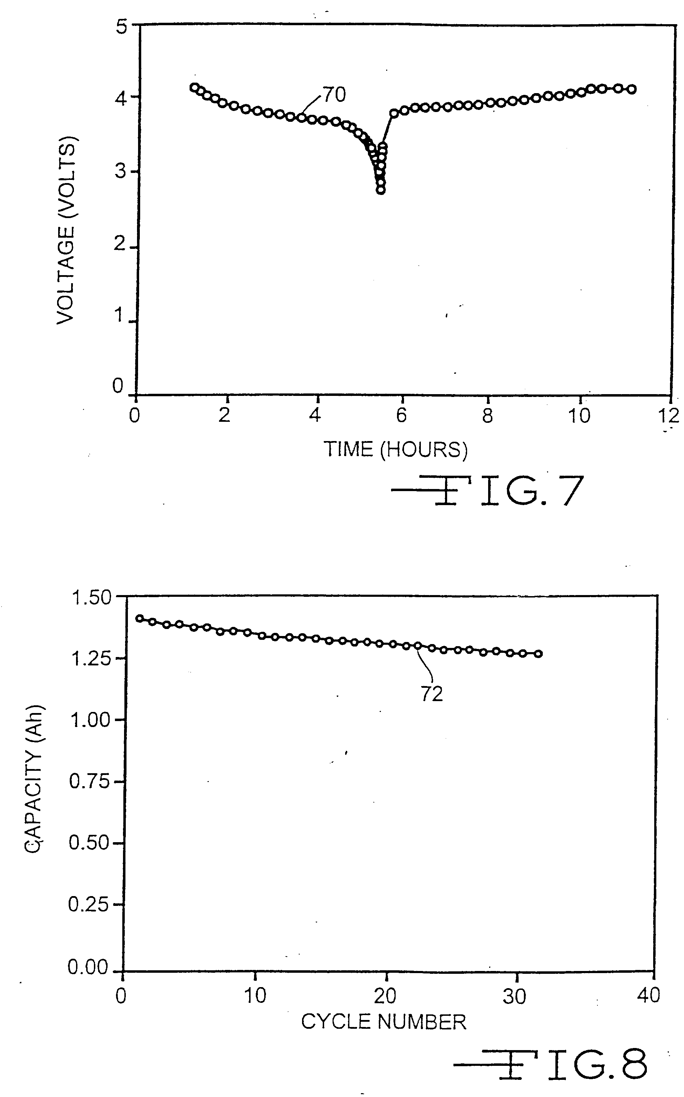

Several cells constructed according to the present invention having a cylindrical spiral shape were subjected to numerous charge and discharge cycles. A representative plot of a single discharge and charge cycle is shown in Fig. 7. As illustrated by curve 70, the traditional charge and voltage discharge profile is observed wherein the cell was charged to 4.1 volts and subsequently discharged to 2.75 volts. When discharged, the representative cell provided high operating voltage throughout. The present invention cell discharged to provide the plot of Fig. 7 was cycled numerous times while exhibiting a low fade rate, as illustrated by curve 72 in Fig. 8.

The following example describes the manner and process of an electrochemical cell according to the present invention, and it sets forth the best mode contemplated by the inventors of carrying out the invention, but it is not to be construed as limiting.

### EXAMPLE

The ability of the lithiated metal oxide/graphite couple to act as a rechargeable electrochemical system was tested in spirally-wound cells activated with a nonaqueous electrolyte. Cathodes for the test cells were fabricated using LiCoO₂ and graphite as a'conductive additive mixed with poly(vinylidene fluoride) binder (PVDF) dissolved in 1-methylpyrrolidone solvent to form a slurry. The LiCoO₂/graphite/PVDF slurry was spread on an aluminum foil substrate and heated to 110°C to evaporate the solvent. The dry cathode was then pressed at 7600 lbs./in² and cut into electrodes 19 cm in length, 2.3 cm in width, with a thickness of 0.020 cm.

Anodes for the test cells were fabricated using irregularly-shaped graphite particles, as defined hereinbefore, mixed with PVDF binder dissolved in 1-methylpyrrolidone solvent to form a slurry. The graphite/PVDF slurry was spread on a copper foil substrate and heated to 110°C to evaporate the solvent. The dry electrode was then pressed at 4600 lbs./in² and cut into electrodes 20 cm in length, 2.5 cm in width, with a thickness of 0.020 cm. A nickel tab was welded to the copper foil to make electrical connection to the anode. The cathode was welded to the elongated terminal pin and the resulting assembly mounted to a semi-automated winder. Two layers of polyethylene separator were used to envelop the terminal pin and cathode assembly. The terminal pin was then rotated 360° to prewind the cathode. The leading edge of the anode assembly was then inserted into the edge of the prewound terminal pin, cathode and separator. The electrodes were then wound together in a "jelly-roll" configuration to give a spirally wound assembly. The cell was then activated with an electrolyte consisting of 1M LiPF₆ in EC/DMC (3:7) filled into the casing under vacuum.

The thusly constructed rechargeable test cells were first charged at a constant potential of +4.1 vs Li/Li⁺, (current limited to 0.5 mA/cm²) and then discharged at a constant current (0.5 mA/cm²) down to a voltage of +2.75 V vs Li/Li⁺, for at least 5 cycles. The voltage vs time profile of the cells was monitored and the capacity delivered by the cells calculated. On completion of the test, the cells were disassembled in the fully charged state to evaluate the condition of the fully-lithiated graphite anode, and to examine the anode for the presence of any deposited lithium metal.

The cells containing anodes using graphite with irregularly-shaped particles according to the present invention displayed high capacity when discharged at a high rate (up to 8 mA/cm² of electrode surface area) when configured with a cell balance of about 2.5 to about 2.9 (Fig. 3), with no deposition of metallic lithium at the anode. In contrast, comparable cells using mesocarbon microbead-type graphite with regularly-shaped particles displayed significant amounts of deposited lithium on the anode. Therefore, in order to eliminate the formation of metallic lithium at the anode surface, cells utilizing graphite with regularly-shaped particles must limit the cell balance to less than 2.5, which in turn limits the delivered capacity of the cell.

It is appreciated that various modifications to the present inventive concepts described herein may be apparent to those of ordinary skill in the art without departing from the spirit and scope of the present invention as defined by the herein appended claims.

## Claims

1. A secondary electrochemical cell which comprises:
a) a casing;
b) a negative electrode comprising a negative electrode active material which intercalates with a material selected from Groups IA, IIA or IIIB of the Periodic Table of Elements, including the alkali metals;
c) a positive electrode comprising a positive electrode active material which intercalates with the material selected from Groups IA, IIA or IIIB of the Periodic Table of Elements, including the alkali metals, wherein the negative electrode and the positive electrode are electrochemically associated with each other housed in the casing, and wherein a periphery of the positive electrode is completely bounded by a periphery of the negative electrode to prevent the material selected from Group IA, IIA or IIIB of the Periodic Table of Elements, including the alkali metals, from plating as the cell is repeatedly cycled between a charged and discharged condition; and
d) an electrolyte solution activating the negative and positive electrodes.

2. The electrochemical cell of claim 1 in which the material selected from Groups IA, IIA or IIIB of the Periodic Table of Elements is an alkali metal.

3. The electrochemical cell of claim 1 or claim 2 wherein the casing is of a conductive material selected from the group consisting of Type 304 austenitic stainless steel, Type 304L austenitic stainless steel, Type 316 austenitic stainless steel, Type 316L austenitic stainless steel, titanium and alloys of titanium.

4. The electrochemical cell of any one of the preceding claims wherein the casing is of annealed stainless steel provided by heating the casing in an atmosphere selected from the group consisting of a vacuum, hydrogen, nitrogen, argon and helium, and mixtures thereof, to a temperature of about 1,040°C to about 1,090°C, followed by cooling in the vacuum or an atmosphere selected from the group consisting of hydrogen, nitrogen, argon, and helium, and mixtures thereof through a temperature range of 780°C to 450°C in about fifteen minutes, or less.

5. The electrochemical cell of any one of the preceding claims wherein the positive electrode is provided in a sheet form having spaced apart first and second ends meeting with first and second edges extending to opposed sides to provide the positive electrode having a thickness and the negative electrode is provided in a sheet form having spaced apart first and second ends meeting with first and second edges extending to opposed sides to provide the negative electrode having a thickness and wherein the negative electrode is provided side-by-side with the positive electrode having an intermediate separator such that the first and second ends and the first and the second edges of the negative electrode extend beyond the first and second ends and the first and second edges of the positive electrode to provide the positive electrode bounded by the negative electrode.

6. The electrochemical cell of any one of the preceding claims wherein the alkali metal is lithium.

7. The electrochemical cell of any one of the preceding claims wherein the negative electrode active material is selected from the group consisting of coke, carbon black, graphite, acetylene black, carbon fibers, pitch carbon, synthetic carbon, mesocarbon microbeads and glassy carbon, and mixtures thereof.

8. The electrochemical cell of claim 7 wherein the negative electrode active material includes graphite having an average particle size of about 20 to 30 µm, a *d*₀₀₂ spacing of about 3.364 to 3.369 Å, a Lc of about 800 to 1000 Å, a bulk density of about 0.5 to 1.0 g/cm³, and a specific surface area of about 1.5 to 4.0 m²/g.

9. The electrochemical cell of any one of the preceding claims wherein the negative electrode active material is contacted to a negative current collector selected from the group consisting of copper, nickel, nickel plated steel, stainless steel and titanium.

10. The electrochemical cell of claim 9 wherein the negative electrode current collector is in a form selected from the group consisting of foil, perforated screen, chemically etched screen and expanded screen.

11. The electrochemical cell of any one of the preceding claims wherein the negative electrode active material is mixed with a fluoro-resin binder.

12. The electrochemical cell of any one of the preceding claims wherein the positive electrode active material is selected from the group consisting of lithiated oxides, lithiated sulfides, lithiated selenides and lithiated tellurides of the group selected from vanadium, titanium, chromium, copper, molybdenum, niobium, iron, nickel, cobalt and manganese and mixtures thereof.

13. The electrochemical cell of any one of the preceding claims wherein the positive electrode active material is contacted to an aluminium current collector.

14. The electrochemical cell of claim 13 wherein the aluminium positive electrode current collector is in a form selected from the group of foil, perforated screen, chemically etched screen and expanded screen.

15. The electrochemical cell of any one of the preceding claims wherein the positive electrode active material is mixed with a fluoro-resin binder.

16. The electrochemical cell of any one of the preceding claims wherein the positive electrode active material is mixed with a conductive additive selected from the group consisting of acetylene black, carbon black, graphite, nickel powder, aluminium powder, titanium powder and stainless steel powder, and mixtures thereof.

17. The electrochemical cell of any one of the preceding claims wherein the electrolyte includes an alkali metal salt dissolved in at least one nonaqueous solvent selected from the group consisting of dimethyl carbonate, diethyl carbonate, dipropyl carbonate, ethylmethyl carbonate, methylpropyl carbonate, ethylpropyl carbonate, ethylene carbonate, propylene carbonate, butylene carbonate, vinylene carbonate and γ-butyrolactone, and mixtures thereof.

18. An electrochemical cell which comprises:
a) a casing of a material having a magnetic susceptibility of at least about 182 x 10⁶, or greater;
b) a negative electrode including graphite contacted to a copper current collector, wherein the graphite has an average particle size of about 20 to 30 µm, a *d*₀₀₂ spacing of about 3.364 to 3.369 Å, a Lc of 800 to 1000 Å, a bulk density of about 0.5 to 1.0 g/cm³, and a specific surface area of about 1.5 to 4.0 m²/g;
c) a positive electrode comprising a lithium cobalt oxide contacted to an aluminium current collector, wherein the negative electrode and the positive electrode are electrochemically associated with each other housed in the casing; and
d) an electrolyte solution activating the negative and the positive electrodes.

19. The electrochemical cell of any one of the preceding claims wherein a weight of the positive electrode active material to a weight of the negative electrode active material is 1.3 to 2.9.

20. A method for providing the electrochemical cell of claim 1 or claim 2 comprising the steps of:
a) providing a casing of a material having a magnetic susceptibility of at least 182 x 10⁶, or greater;
b) providing a negative electrode which intercalates with an alkali metal; c) providing a positive electrode comprising a positive electrode active material which intercalates with the alkali metal;
d) housing the negative and the positive electrodes inside the casing electrochemically associated with each other and wherein a periphery of the positive electrode is completely bounded by a periphery of the negative electrode to prevent alkali metal from plating as the cell is repeatedly cycled between a charged and discharged condition; and
e) activating the negative and positive electrodes with an electrolyte.

21. A method as claimed in claim 20 wherein the casing, positive and negative electrodes, positive and negative electrode active materials, current collectors and electrolytes are as defined in any one of claims 1 to 19.
